# EUROPÄISCHE PATENTSCHRIFT

(11) **EP 2 706 633 B1**
(45) Veröffentlichungstag und Bekanntmachung des Hinweises auf die Patenterteilung: **21.03.2018**
(21) Anmeldenummer: 13183117.4
(22) Anmeldetag: 05.09.2013
(51) Int. Cl.: H02B 1/30

(54) **Einsatzstück für Wandöffnungen von Installationsschränken**
Insert for wall openings of installation cabinets
Insert pour ouvertures murales d'armoires d'installation

(30) Priorität: 10.09.2012 DE 102012108385
(43) Veröffentlichungstag der Anmeldung: 12.03.2014
(73) Patentinhaber: Hager Electro GmbH & Co. KG, 66440 Blieskastel (DE)
(72) Erfinder: Amendola, Ettore, 57600 Oeting (FR); Vannesson, Damien, 57520 Grosbliederstroff (FR)
(74) Vertreter: Nuss, Laurent

(56) Entgegenhaltungen:
- EP-A1- 1 744 421
- EP-A1- 1 744 422
- EP-A2- 1 463 169
- DE-U1- 29 810 323
- FR-A1- 2 895 842
- GB-A- 2 233 505
- JP-U- S57 141 604

## Beschreibung

Die Erfindung betrifft ein Einsatzstück aus isolierendem Material zur Anordnung in einer Durchgangsöffnung in einer Seitenwand eines Schranks der Elektroinstallation von Gebäuden.

Aus der Druckschrift JP S57 141 604 U ist ein Schrank umfassend elektrische Einrichtungen bekannt, welcher ein Bauteil aufweist, mittels welches entweder eine abschließende Wandung oder ein weiterer Schrank an dem Schrank befestigt werden kann.

Aus der Druckschrift EP 1 744 422 A1 ist ein Zähler- und/oder Verteilerschrank bekannt, der ein Platte umfasst, mittels welcher eine Öffnung in dem Schrank verschlossen werden kann. Die Platte kann mit einem Verbindungselement versehen werden, mittels welchem sich zwei Schränke miteinander verbinden lassen.

Erfindungsgemäß ist dieses Einsatzstück gemäß den Merkmalen des Anspruchs 1 ausgebildet. Vorteilhaft kann ein solches, vorzugsweise aus Kunststoff hergestelltes Einsatzstück im Zusammenhang mit der Herstellung elektrischer und mechanischer Verbindungen zwischen dem Installationsschrank und weiteren Installationseinrichtungen unterschiedliche Aufgaben erfüllen.

Insbesondere kann das Einsatzstück zur Bildung einer isolierten Kabeldurchführung, als Halter für ein Element der Elektroinstallation, wie z.B. eine Steckdose, oder/und zur Herstellung einer mechanischen Verbindung zwischen dem Schrank und einer an den Schrank angrenzenden weiteren Einrichtung der Elektroinstallation, insbesondere eines weiteren Schranks oder Kabelkanals, dienen. Die Verbindung des Schranks mit einem weiteren Schrank erlaubt insbesondere eine Zentrierung und Ausrichtung des weiteren Schranks, bevor dieser fest an einer Montagewand installiert wird.

Zweckmäßig ist das die Verbindungsfunktion aufweisende Einsatzstück sowohl von der Schrankaußenseite als auch der Schrankinnenseite her in die Durchgangsöffnung einführbar.

Vorzugsweise lässt sich das Einsatzstück in der Durchgangsöffnung an der Seitenwand einrasten oder/und es hintergreift die Seitenwand in der Art eines Bajonettverschlusses.

In einer der Herstellung einer isolierten Kabeldurchführung dienenden Ausführungsform weist das Einsatzstück zweckmäßig einen Deckelabschnitt auf, der aus dem übrigen Einsatzstück ausbrechbar oder in dieses lösbar eingeclipst ist. Solange die Herstellung einer elektrischen Verbindung zum Innenraum des Installationsschranks nicht gewünscht wird, dient das Einsatzstück dem Verschluss der Durchgangsöffnung in der Seitenwand des Schrankes und steht so zur anderweitigen Nutzung jederzeit zur Verfügung.

In einer Ausführungsform sind das Einsatzstück und die Durchgangsöffnung derart gestaltet, dass das Einsatzstück in die Durchgangsöffnung unter wesentlicher Erleichterung der Montage in zueinander um 90° verdrehten Stellungen einführbar ist.

Das Einsatzstück weist erfindungsgemäß einen über den Rand der Durchgangsöffnung überstehenden Flanschteil und einen in die Durchgangsöffnung einführbaren Schaftteil auf.

Erfindungsgemäß weist der Schaftteil in Einführungsrichtung des Einsatzstücks in die Durchgangsöffnung eine solche Länge auf. dass er in eine der Durchgangsöffnung entsprechende weitere Durchgangsöffnung in einer angrenzenden Wand, z.B. Seitenwand des obengenannten weiteren Schrankes hineinreicht. Auf diese Weise kann das Einsatzstück eine isolierte, z.B. die Schränke auch mechanisch verbindende Kabeldurchführung für die Verlegung von elektrischen Kabeln von dem einem Schrank in den anderen bilden. Erfindungsgemäß weist der Schaftteil in unterschiedlichen Abständen zu dem Flanschteil Einrichtungen zur Befestigung des Einsatzstücks an der Seitenwand des Schrankes sowie, für die Verbindung von z.B. zwei Schränken, Einrichtungen zur Befestigung an der Seitenwand des weiteren Schrankes auf. Insbesondere ist der Schaftteil an der angrenzenden Wand z.B. des weiteren Schrankes einrostbar.

In der Ausführungsform, in der das Einsatzstück zur Aufnahme einer Steckdose dient, lässt sich das Einsatzstück so gestalten, dass es Steckdosen oder andere Installationselemente unterschiedlicher Bauart aufnehmen kann.

Der Deckelabschnitt kann vorteilhaft Lüftungsöffnungen aufweisen, die eine kühlende Durchströmung des Installationsschranks ermöglichen, so dass das Einsatzstück auch eine Ventilationsfunktion erfüllt.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: einen Teil eines Installationsschranks mit einem erfindungsgemäßen Einsatzstück,
- Fig. 2: das in dem Installationsschrank von Fig. 1 verwendeten Einsatzstück in verschiedenen perspektivischen Ansichten,
- Fig. 3: das Einsatzstück von Fig. 2 in abweichend von Fig. 1 umgekehrter Montage-stellung im Schrank,
- Fig. 4: zwei, durch das Einsatzstück von Fig. 2 horizontal miteinander verbundene Installationsschränke,
- Fig. 5: einen Teil eines Installationsschranks mit einem Einsatzstück gemäß einem zweiten Ausführungsbeispiel für die Erfindung,
- Fig. 6: zwei Elektroinstallationsschränke, die über das Einsatzstück gemäß Fig. 5 miteinander verbunden sind,
- Fig. 7: ein weiteres Ausführungsbeispiel für ein erfindungsgemäßes Einsatzstück, und
- Fig. 8: zwei durch das Einsatzstück von Fig. 2 vertikal miteinander verbundene Installationsschränke.

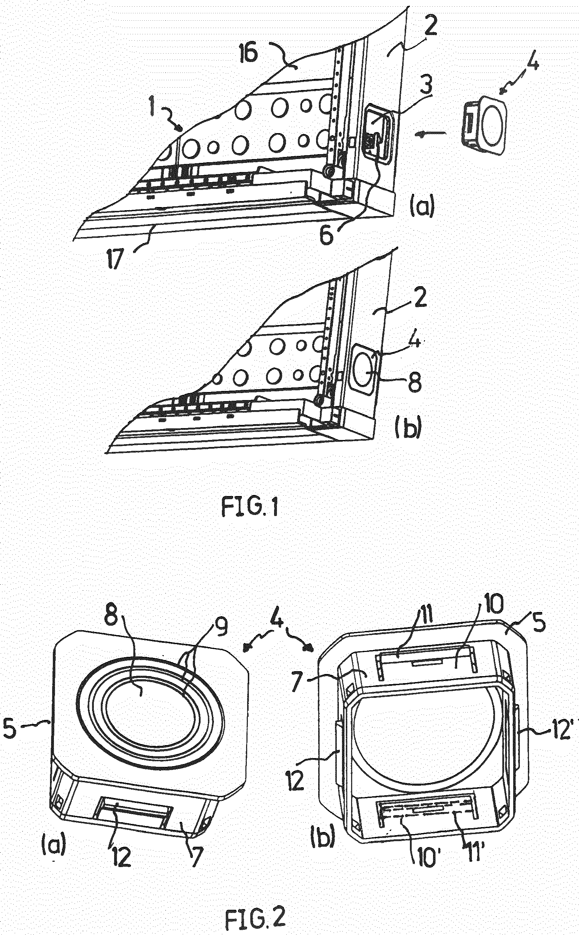

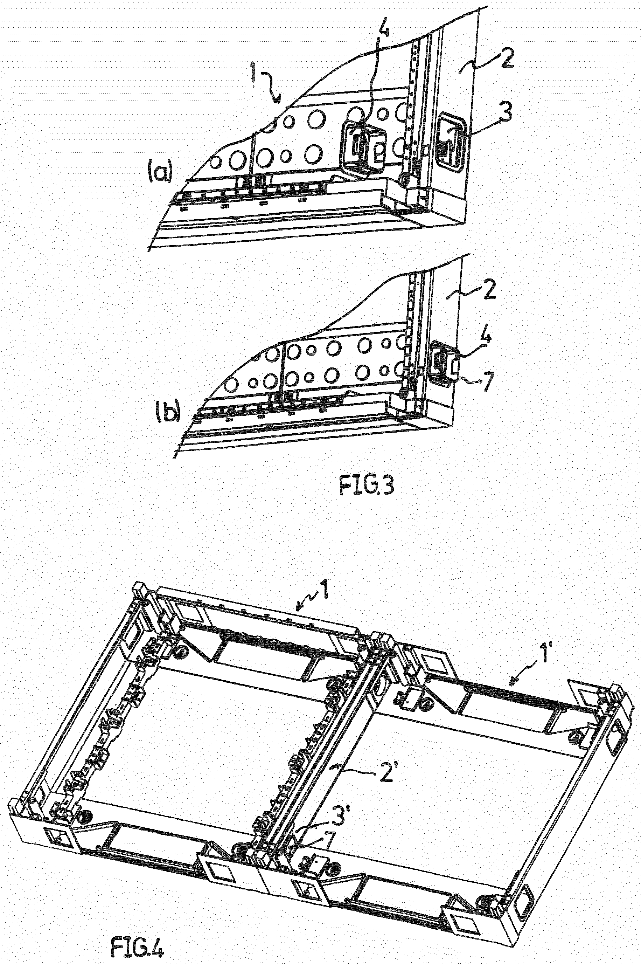

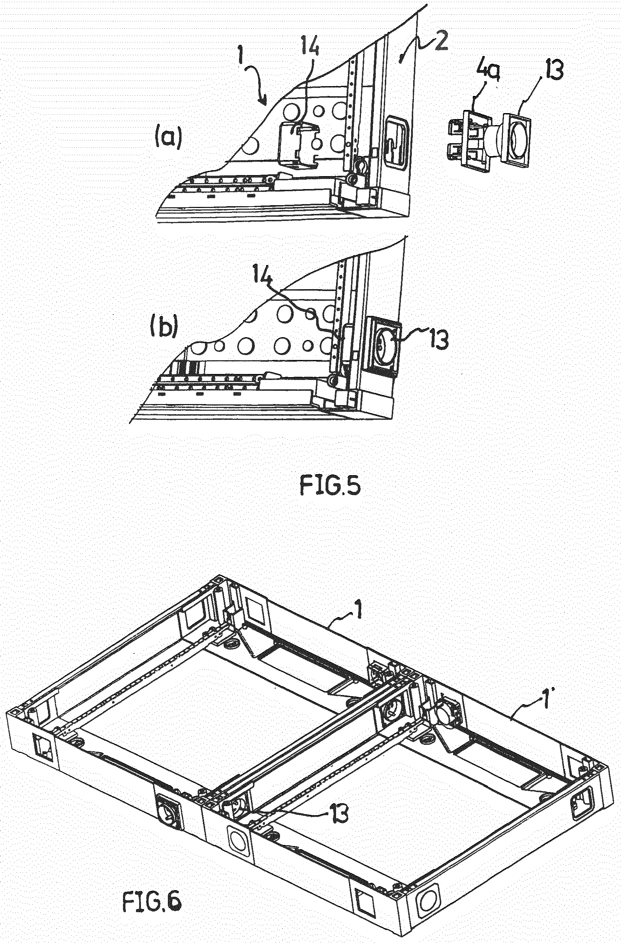

Ein in Fig. 1 ausschnittsweise gezeigter, aus Blech hergestellter Zähler- oder/und Verteilerschrank 1 für die Elektroinstallation von Gebäuden weist an einer vertikalen Seitenwand 2 nahe einer unteren Schrankecke eine Durchgangsöffnung 3 auf. Die Seitenwand 2 erstreckt sich senkrecht zu einer Rückwand 16 und einer unteren Seitenwand 17. In die Durchgangsöffnung 3 lässt sich ein in Fig. 2 gesondert dargestelltes Einsatzstück 4 einführen und an der Seitenwand 2 befestigen. In dem gezeigten Ausführungsbeispiel weist die Durchgangsöffnung 3 einen im Wesentlichen quadratischen Querschnitt auf. Der Durchgangsöffnung 3 entsprechende Öffnungen können nahe jeder der vier Ecken des Schrankes vorgesehen sein, wie aus den Figuren 4 und 6 hervorgeht.

Wie Fig. 2 zu entnehmen ist, umfasst das Einsatzstück 4 einen Flanschteil 5, dessen Rand im montierten Zustand des Einsatzstücks 4 in einer Randeinsenkung 6 der Durchgangsöffnung 3 zur Anordnung kommt, so dass die äußere Oberfläche des Einsatzstücks 4 bündig mit der Außenfläche der Seitenwand 2 abschließt.

Von dem Flanschteil 5 des einstückig aus isolierendem Material, vorzugsweise Kunststoff, hergestellten Einsatzstücks 4 erstreckt sich ein kastenartiger Schaftteil 7, dessen Querschnittsfläche an die Querschnittsfläche der Durchgangsöffnung 3 angepasst ist.

Der Flanschteil 5 weist einen ausbrechbaren Deckelabschnitt 8 auf. Zum Ausbrechen ist wahlweise eine von drei kreisförmigen Sollbruchlinien 9 auswählbar, um unterschiedlich große Durchgangsquerschnitte zu bilden.

An dem Schaftteil 7 des Einsatzstücks 4 sind aufeinander gegenüberliegenden Seiten Rastzungen 10 und 10' mit je einer nach außen vorstehenden Rastnase 11 gebildet. Ähnliche Rastzungen mit Rastnasen 12 und 12' befinden sich an den beiden übrigen Seiten des Schaftteils 7, wobei die Rastnasen 12 und 12' in Richtung senkrecht zu dem Flanschteil 5 weiter von dem Flanschteil 5 entfernt sind als die Rastnasen 11 und 11'. In dem in Fig. 1 gezeigten Montagezustand sind die Rastnasen 11 in Einführungsrichtung hinter dem Öffnungsrand der Durchgangsöffnung 3 an der vertikalen Seitenwand 2 eingerastet und das Einsatzstück 4 ist dadurch fest mit der Seitenwand 2 verbunden. In dem in Fig. 1b gezeigten Zustand bildet das Einsatzstück 4 mit dem noch vorhandenen Deckelabschnitt 8 lediglich eine Abdeckung für die Durchgangsöffnung 3 und wird in der Durchgangsöffnung 3 zur anderweitigen Nutzung aufbewahrt. Gegebenenfalls lässt sich die Rastbefestigung von der Schrankinnenseite her lösen.

Abweichend von der beschriebenen Befestigungsmöglichkeit durch Einrasten könnte das Einsatzstück in der Durchgangsöffnung 3 auch verriegelbar sein, insbesondere auf der Schrankinnenseite. Gegebenenfalls ist eine plombierbare Verriegelung vorgesehen.

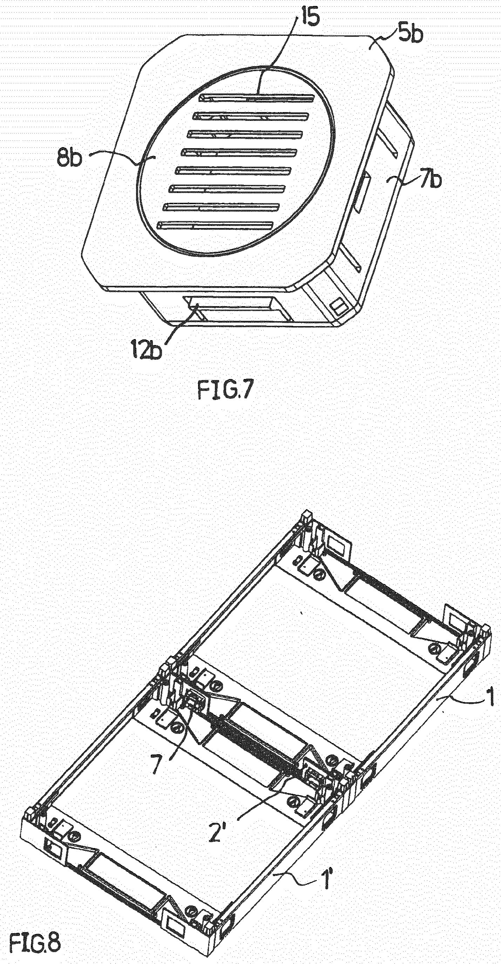

Eine Nutzungsmöglichkeit für das Einsatzstück 4 zeigen die Figuren 3,4 und 8. Wie daraus hervorgeht, lässt sich das Einsatzstück 4 aus der umgekehrten Richtung von der Innenseite des Schrankes 1 her in die Durchgangsöffnung 3 einsetzen und ein von der Seitenwand 2 vorstehender Abschnitt des Schaftteils 7 ferner in eine entsprechende Durchgangsöffnung 3' in einer Seitenwand 2' eines weiteren Schranks 1' einführen, welcher gemäß Fig. 3 und 4 an eine vertikale Seite oder gemäß Fig. 8 an eine Unterseite des Schranks 1 angrenzend angeordnet ist. In diesem Fall rasten die Rastzungen 12 und 12' am Öffnungsrand der Durchgangsöffnung 3' in Einführungsrichtung hinter der Seitenwand 2' ein, so dass der Schrank 1 mit dem Schrank 1' durch das Einsatzstück 4 mechanisch verbunden ist. Der Öffnungsabschnitt 8 lässt sich nun ausbrechen, und das Einsatzstück 4 kann einen isolierten Kabeldurchgang zwischen den Schränken 1 und 1' bilden.

Bei dem Schrank 1' kann es sich insbesondere um einen Geräteschrank für Multimediageräte handeln, der insbesondere Kommunikationsgeräte oder dergleichen aufnimmt. Es versteht sich, dass anstelle der Verbindung zwischen den beiden Schränken 1,1' durch das Einsatzstück 4 auch eine Verbindung z.B. zu einem Kabelkanal hergestellt werden kann.

Fig. 5 zeigt ein weiteres Ausführungsbeispiel für ein Einsatzstück 4a, das in gleicher Weise wie das vorangehend beschriebene Einsatzstück 4 in eine Durchgangsöffnung 3 in einer vertikalen Seitenwand 2 eines Elektroinstallationsschranks 1 einsetzbar und mittels Rastnasen in der Durchgangsöffnung fixierbar ist. Im Unterschied zu dem Einsatzstück 4 dient das Einsatzstück 4a jedoch nicht vorrangig zur Bildung einer Isolation für eine Kabeldurchführung, sondern der Aufnahme einer Steckdose 13, die über nicht gezeigte Mittel an dem Einsatzstück 4a befestigt werden kann, z.B. einrastbar ist. Eine isolierende Abdeckung 14 lässt sich auf das Einsatzstück 4a an dessen der Steckdose 13 abgewandten Seite aufclipsen.

Fig. 6 zeigt die Vorrichtung von Fig. 5 in einem Zustand, in welchem das Einsatzstück 4a mechanisch den Schrank 1 mit einem Geräteschrank 1' verbindet. Innerhalb des Schranks 1 lässt sich Strom entnehmen und der Steckdose 13 zuführen. Geräte aus dem Schrank 1' lassen sich über Stecker dann wahlweise an der Steckdose 13 anschließen.

Anstelle der Netzsteckdose 13 könnte ein anderes Installationselement, wie z.B. ein USB-, Antennen- oder Netzwerkstecksockel, vorgesehen sein. Es versteht sich, dass das Einsatzstück 4a ohne Installationselement auch lediglich als Verbindungsstück zwischen den Schränken 1,1' oder zwischen dem Schrank 1 und einer anderen Installationseinrichtung dienen kann.

Die in den Figuren 4 und 6 gezeigte Verbindung zwischen den Schränken 1,1' dient in erster Linie als vorläufige Heftverbindung, die eine Fixierung und genaue Ausrichtung der an einer Wand zu befestigenden Schränke ermöglicht.

Fig. 7 zeigt ein weiteres Ausführungsbeispiel für ein Einsatzstück mit einem Flanschteil 5b und einem Schaftteil 7b. Ein ausbrechbarer Deckelabschnitt 8b weist Entlüftungsschlitze 15 auf, die den Ein- oder Austritt eines kühlenden Luftstroms in den bzw. aus dem betreffenden Schrank ermöglichen.

Der Flanschteil 5 bzw. 5b der gezeigten Einsatzstücke könnte auf seiner dem Schaftteil zugewandten Seite mit einer umlaufenden Dichtung versehen sein.

## Patentansprüche

1. Einsatzstück (4) aus isolierendem Material zur Anordnung in einer Durchgangsöffnung (3) in einer Seitenwand (2) eines Schranks (1) der Elektroinstallation von Gebäuden,
wobei das Einsatzstück als wahlweise unterschiedlich nutzbares Multifunktionsteil ausgebildet ist und wobei das Einsatzstück (4) einen Flanschteil (5), der geeignet ist, über den Rand der Durchgangsöffnung (3) über zu stehen, und einen in die Durchgangsöffnung (3) einführbaren Schaftteil (7) umfasst, wobei der Schaftteil (7) eine in Einführungsrichtung des Einsatzstücks (4) solche Länge aufweist, dass er geeignet ist, in eine der Durchgangsöffnung (3) entsprechende Durchgangsöffnung (3') in einer angrenzenden Wand (2') einer weiteren Einrichtung (1') hinein zu reichen, wobei das Einsatzstück (4) sowohl von der Schrankinnenseite als auch von der Schrankaußenseite her in die Durchgangsöffnung (3) einführbar ist und dazu geeignet ist, den Schrank (1) mit der weiteren Einrichtung (1') zu verbinden, **dadurch gekennzeichnet, dass** der Schaftteil (7) in unterschiedlichen Abständen zu dem Flanschteil (5) Einrichtungen (11) zur Befestigung des Einsatzstücks (4) an der Seitenwand (2) und Einrichtungen (12) zur Befestigung an der angrenzenden Wand (2') der weiteren Einrichtung (1') aufweist.

2. Einsatzstück nach Anspruch 1,
**dadurch gekennzeichnet,**
**dass** das Einsatzstück (4) zur Bildung einer isolierten Kabeldurchführung, als Halter für ein Element der Elektroinstallation, wie z.B. eine Steckdose (13), oder/und zur Herstellung einer mechanischen Verbindung zwischen dem Schrank (1) und einer an den Schrank (1) angrenzenden weiteren Einrichtung der Elektroinstallation, insbesondere eines weiteren Schranks (1') oder eines Kabelkanals, dienen kann.

3. Einsatzstück nach Anspruch 1 oder 2,
**dadurch gekennzeichnet, dass** das Einsatzstück (4) in der Durchgangsöffnung (3) an der Seitenwand (1) einrastbar ist oder die Seitenwand in der Art eines Bajonettverschlusses hintergreift.

4. Einsatzstück nach einem der Ansprüche 1 bis 3,
**dadurch gekennzeichnet,**
**dass** das Einsatzstück (4) in der Durchgangsöffnung (3) in zueinander um 90° verdrehten Stellungen montierbar ist.

5. Einsatzstück nach einem der Ansprüche 1 bis 4,
**dadurch gekennzeichnet,**
**dass** das Einsatzstück (4) einen ausbrechbaren oder einschnappbaren Deckelabschnitt (8) umfasst.

6. Einsatzstück nach einem der Ansprüche 1 bis 5,
**dadurch gekennzeichnet,**
**dass** ein Deckelabschnitt (8b) Lüftungsöffnungen (15) aufweist.

7. Einsatzstück nach Anspruch 1,
**dadurch gekennzeichnet,**
**dass** der Schaftteil (7) an der angrenzenden Wand (2') der weiteren Einrichtung (1') einrastbar ist.

8. Schrank (1) der Elektroinstallation von Gebäuden mit einem Einsatzstück nach einem der Ansprüche 1 bis 7.

## Claims

1. An insert (4) made of insulating material for arranging in a through-opening (3) in a side wall (2) of a cabinet (1) in the electrical installation of buildings,
wherein the insert is designed as a multifunctional part which can be used selectively in different ways, and wherein the insert (4) comprises a flange part (5) which is suitable for projecting over the edge of the through-opening (3), and a shaft part (7) which can be introduced into the through-opening (3),
wherein the shaft part (7) is of such a length in the direction of introduction of the insert (4) that it is suitable to extend into a through-opening (3'), which corresponds to the through-opening (3), in an adjoining wall (2') of a further device (1'), wherein the insert (4) can be introduced into the through-opening (3) both from the inside of the cabinet and from the outside of the cabinet and is suitable for connecting the cabinet (1) to the further device (1'), **characterised in that** the shaft part (7) has at different distances from the flange part (5) means (11) for fastening the insert (4) to the side wall (2) and means (12) for fastening to the adjoining wall (2') of the further device (1').

2. An insert according to Claim 1,
**characterised in that**
the insert (4) can serve to form an insulated cable bushing, as a holder for an element of the electrical installation, such as a socket (13), or/and for producing a mechanical connection between the cabinet (1) and a further device of the electrical installation which adjoins the cabinet (1), in particular a further cabinet (1') or a cable duct.

3. An insert according to Claim 1 or 2,
**characterised in that**
the insert (4) in the through-opening (3) can be latched into the side wall (1) or engages behind the side wall in the manner of a bayonet lock.

4. An insert according to one of Claims 1 to 3,
**characterised in that**
the insert (4) can be mounted in the through-opening (3) in positions which are turned by 90° relative to each other.

5. An insert according to one of Claims 1 to 4,
**characterised in that**
the insert (4) comprises a knock-out or snap-in cover portion (8).

6. An insert according to one of Claims 1 to 5,
**characterised in that**
a cover portion (8b) has ventilation openings (15).

7. An insert according to Claim 1,
**characterised in that**
the shaft part (7) can be latched into the adjoining wall (2') of the further device (1').

8. A cabinet (1) of the electrical installation for buildings, having an insert according to one of Claims 1 to 7.

## Revendications

1. Insert (4) en matériau isolant à disposer dans une ouverture traversante (3) dans une paroi latérale (2) d'une armoire (1) de l'installation électrique de bâtiments,
lequel insert est conçu comme une pièce multifonctionnelle utilisable au choix de différentes façons et lequel insert (4) comprend une partie bride (5) qui est adaptée à dépasser du bord de l'ouverture traversante (3) et une partie tige (7) pouvant être introduite dans l'ouverture traversante (3), laquelle partie tige (7) présente une longueur telle, dans la direction d'introduction de l'insert (4), qu'elle est adaptée à se prolonger dans une ouverture traversante (3'), correspondant à l'ouverture traversante (3), dans une paroi adjacente (2') d'un autre dispositif (1'), l'insert (4) pouvant être introduit dans l'ouverture traversante (3) aussi bien depuis le côté intérieur de l'armoire que depuis le côté extérieur de l'armoire et étant adapté à relier l'armoire (1) à l'autre dispositif (1'),
**caractérisé en ce**
**que** la partie tige (7) présente, à différentes distances de la partie bride (5), des dispositifs (11) destinés à la fixation de l'insert (4) à la paroi latérale (2) et des dispositifs (12) destinés à la fixation à la paroi adjacente (2') de l'autre dispositif (1').

2. Insert selon la revendication 1,
**caractérisé en ce**
**que** l'insert (4) peut servir à former une traversée de câbles isolée, de support pour un élément de l'installation électrique, comme par exemple une prise de courant (13), ou/et à réaliser une liaison mécanique entre l'armoire (1) et un autre dispositif, adjacent à l'armoire (1), de l'installation électrique, en particulier une autre armoire (1') ou un conduit de câbles.

3. Insert selon la revendication 1 ou 2,
**caractérisé en ce**
**que** l'insert (4) peut être encliqueté dans l'ouverture traversante (3) sur la paroi latérale (1) ou vient se bloquer derrière la paroi latérale à la manière d'un verrouillage à baïonnette.

4. Insert selon l'une des revendications 1 à 3,
**caractérisé en ce**
**que** l'insert (4) peut être monté dans l'ouverture traversante (3) dans des positions tournées de 90° les unes par rapport aux autres.

5. Insert selon l'une des revendications 1 à 4,
**caractérisé en ce**
**que** l'insert (4) comprend une partie couvercle (8) défonçable ou encliquetable.

6. Insert selon l'une des revendications 1 à 5,
**caractérisé en ce**
**qu'**une partie couvercle (8b) présente des ouvertures de ventilation (15).

7. Insert selon la revendication 1,
**caractérisé en ce**
**que** la partie tige (7) est encliquetable sur la paroi adjacente (2') de l'autre dispositif (1').

8. Armoire (1) de l'installation électrique de bâtiments, comportant un insert selon l'une des revendications 1 à 7.
